Europäisches Patentamt

European Patent Office

Office européen des brevets

(19)

(11) EP 0 496 329 B1

(12) FASCICULE DE BREVET EUROPEEN

(45) Date de publication et mention
de la délivrance du brevet:
**13.03.1996 Bulletin 1996/11**

(51) Int Cl.⁶: **G01S 13/95**, G01S 7/40,
G01S 13/89, G01S 13/40,
G01S 13/02

(21) Numéro de dépôt: **92100868.6**

(22) Date de dépôt: **20.01.1992**

(54) **Dispositif, embarqué sur satellite, de mesure du coefficient de rétrodiffusion de la mer**

Im Satellit eingebautes Seestreustrahlungsmessgerät

Satellite borne sea scatterometer

(84) Etats contractants désignés:
**DE ES FR GB IT SE**

(30) Priorité: **22.01.1991 FR 9100678**

(43) Date de publication de la demande:
**29.07.1992 Bulletin 1992/31**

(73) Titulaire: **ALCATEL ESPACE**
**F-92407 Courbevoie Cédex (FR)**

(72) Inventeur: **Marquet, Dominique**
**F-31190 Grepiac (FR)**

(74) Mandataire: **Weinmiller, Jürgen et al**
**Lennéstrasse 9**
**Postfach 24**
**D-82336 Feldafing (DE)**

(56) Documents cités:
• IGARSS 90 IEEE vol. 3, 24 Mai 1990,
MARYLAND , USA pages 2455 - 2458; D J Q
CARTER: 'A proposed wind scatterometer
pulsed CW design for the first european'
• IGARSS 90 IEEE vol. 3, 24 Mai 1990,
MARYLAND , USA pages 2451 - 2454; H. R.
SCHULTE ; J. WEBER: 'A novel wind
scatterometer design employing frequency
modulated pulses'
• IGARSS 90 IEEE vol. 3, 24 Mai 1990,
MARYLAND , USA pages 2081 - 2084; D.
CARTER ;S.AUSTIN: 'European space
agency's remote sensing satellite(ERS1)active
microwave'
• IEEE TRANSACTIONS ON GEOSCIENCE AND
REMOTE SENSING. vol. 26, no. 6, 1 Novembre
1988, NEW YORK , NY , USA pages 869 - 878;
D. LONG ; C. CHI ; F. LI: 'The design of an
onboard digital doppler processor for a
spaceborne'
• IGARSS 86 IEEE GRSS vol. 1, 1 Août 1986,
PARIS , FRANCE pages 389 - 394; P. HANS ; H.
MUNZ ET AL.: 'Quasi real time conversion of
ERS1 scatterometer raw data to S0 triplets .'
• EASCON 87 IEEE 16 Octobre 1987,
WASHINGTON , DC , USA pages 177 - 183; Y.
HARA ; K. TACHI ET AL.: 'Digital Doppler filter
design for the spaceborne wind scatterometer'
• IEEE TGRS 26 vol. 26, no. 5, 1 Septembre 1988,
NEW YORK , NY pages 532 - 539; N. S. PILLAI ,
A. M. JHA: 'A spaceborne LFM scatterometer
for ocean surface wind vector'

## Description

La présente invention se rapporte à un dispositif, embarqué sur un satellite, de mesure du coefficient de rétrodiffusion de la mer pour la détermination de la vitesse et de la direction des vents en mer.

Il est connu de mesurer par satellite le coefficient de retrodiffusion d'une onde radar émise à radio fréquence par ce satellite en direction de la mer, afin de déterminer la vitesse et la direction des vents en mer, cette rétrodiffusion, dite "de Bragg", étant fortement influencée par le vent à court terme.

On sait que le vent à court terme crée sur la mer des petites vaguelettes, ou "frisotures", dont la longueur d'onde physique est de l'ordre de quelques centimètres.

En utilisant une onde radar, émise à partir du satellite et d'approximativement même longueur d'onde, on crée un phénomène de résonance qui permet de mesurer ce coefficient de rétrodiffusion de la mer, qui est lui-même très dépendant de ce vent à court terme.

La mesure de la direction des vents nécessite de prévoir plusieurs antennes sur ce satellite, ces antennes, généralement au nombre de deux ou trois par "fauchée" (bande d'observation latérale) étant orientées selon des azimuts différents.

La majorité des dispositifs connus prévoient deux ou trois antennes par fauchée, généralement :

- une antenne "avant" dont la trace au sol est dirigée à 45 degrés vers l'avant du satellite en partant de celui-ci;
- une antenne "médiane" dont la trace au sol est perpendiculaire à la trace au sol ("ground track") du satellite; et
- une antenne "arrière" dont la trace au sol est dirigée, de manière symétrique à la trace de l'antenne avant par rapport à la trace de l'antenne médiane, à 45 degrés vers l'arrière.

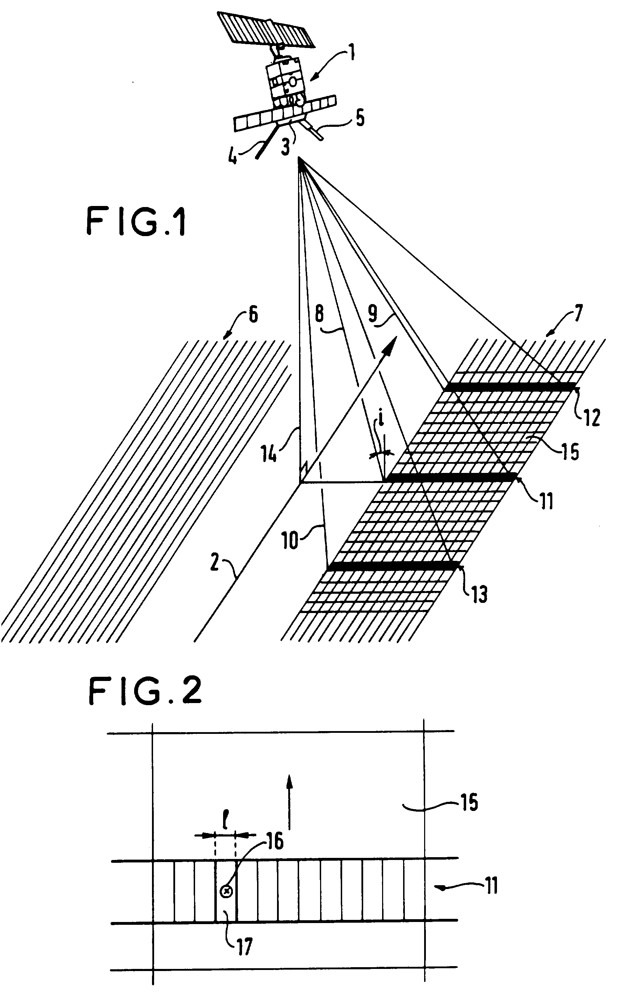

Un tel système est décrit par exemple sur la figure 2 du document D1 = IEEE Trans. Geoscience & Remote Sensing, 26 (1988), n°. 5, pp. 532-539, ou encore sur la figure 1 du document D2 = IGARSS 86 Symposium proceedings, p. 389-394.

Un point déterminé sur la fauchée fait en conséquence l'objet de trois mesures successives, avec des angles d'incidence et azimuthal différents, ces trois visées permettant de lever l'ambiguité entre la direction et l'amplitude du vent à court terme en ce point.

L'utilisation de trois visées par fauchée n'est d'ailleurs pas absolument obligatoire, et par exemple le satellite américain "SEASAT" n'en a utilisé que deux, ce qui avait néanmoins pour inconvénient de rendre plus complexe la levée d'ambiguïté précitée sur la direction des vents.

Outre la réalisation "SEASAT", il convient de citer les systèmes connus suivants :

. Projet "N SCATT" prévoyant un fonctionnement en bande Ku, à l'instar de la réalisation SEASAT, mais utilisant toutefois trois visées par fauchée.

. Réalisations en cours "ERS-1" et "ERS-2", appelées "A.M.I", de l'Agence Spatiale Européenne, utilisant trois antennes par fauchée et des impulsions courtes nécessitant une puissance d'émission élevée. Ces deux réalisations sont partagées avec un radar imageur de type R.S.O (Radar à Synthèse d'Ouverture, ou S.A.R) fonctionnant en bande C.

. Etudes AMI-2 à double fauchée et SCATT-2, qui sont des améliorations des systèmes précédents, sans toutefois être des optima.

Ces systèmes connus nécessitent, hormis pour les deux derniers précités, l'utilisation d'amplificateurs d'emission de forte puissance à tubes, particulièrement onéreux et peu fiables. Ils sont en outre peu ou mal optimisés pour la fonction diffusiométrie. Par exemple, le système ERS-1 nécessite la réalisation d'un compromis "résolution radiométrique, résolution spatiale" qui se fait au détriment de la résolution spatiale. Ce même système, étant partagé avec un S.A.R. imageur, n'est pas optimisé pour la fonction diffusiométrie, et est de taux d'utilisation limité. L'utilisation d'amplificateurs à tube de forte puissance crête (5 kilowatts ou plus) entraîne une mauvaise fiabilité et des risques de décharges gazeuses ou d'effet "multipactor" dans les guides d'ondes qui sont liés à ces amplificateurs.

L'invention, qui vise à remedier à ces inconvénients, propose un dispositif radar, embarqué sur satellite, de mesure du coefficient de rétrodiffusion de la mer pour la détermination de la vitesse et de la direction des vents en mer - dispositif aussi dénommé "diffusiomètre à vent", ou bien plus communément "windscattéromètre" - qui utilise trois visées par fauchée et qui est, par rapport aux dispositifs connus actuellement, bien plus optimisé en prix de revient, en performances et en ressources plateforme (masse, consommation), les seules barrières restantes en pratique étant essentiellement dues aux lois physiques et à l'état d'avancement de la technologie.

Elle se rapporte à cet effet à un diffusiomètre à vent du type précité, donc à trois visées radar par fauchée, ces trois visées définissant respectivement :

. une trace au sol médiane qui est classiquement orthogonale à celle du satellite et qui est située dans un plan vertical passant par celui-ci ;
. une trace au sol avant ;
. une trace au sol arrière ;

**caractérisé en ce que**

ladite trace au sol avant est comprise dans un plan oblique , passant par le satellite et située en avant de celui contenant ladite trace au sol médiane et est parallèle à cette dernière (11), et en ce que ladite trace au sol arrière est comprise dans un autre plan oblique, passant par le satellite et situé en arrière de celui contenant ladite trace au sol médiane, et est parallèle à cette dernière.

Cette caractéristique avantageuse permet d'augmenter la directivité des antennes responsables de ces deux traces au sol avant et arrière, donc leur gain, ce qui permet de diminuer notablement la puissance d'émission et d'augmenter la durée d'impulsion : l'amplificateur d'émission de puissance peut sans problèmes être tout-état-solide, et non plus à tubes comme pour la plupart des réalisations connues.

En outre, la partie réception comporte préférentiellement une voie de mesure de bruit qui est distincte de la voie de mesure du "signal et bruit" et qui a la particularité de fonctionner en parallèle avec cette dernière, c'est à dire en même temps.

On obtient ainsi une mesure de bruit plus précise que précédement, tout en ayant une plus grande bande passante, un temps d'intégration plus long, et une calibration propre.

La fréquence de récurrence peut par ailleurs être augmentée, ce qui augmente d'autant le nombre de vues sur la cellule de résolution spatiale au sol, et ce qui entraîne donc une amélioration de la précision de mesure.

Avantageusement en outre, on utilise une technique radar fonctionnant par "compression d'impulsion" le satellite émettant un signal "chirp" de durée déterminée et modulé linéairement en fréquence et effectuant à la réception de l'echo un traitement de bord du type "filtre adapté" qui réalise, à l'instar des filtres acoustiques à compression d'impulsion par exemple, une corrélation mathématiquement bien connue en soi et bien définie entre l'echo renvoyé par la cible et le signal émis, retardé en conséquence en temps et éventuellement décalé en fréquence (en ce qui concerne les faisceaux avant et arrière). Ce processus, étant optimal, rend négligeables les pertes de traitement.

Avantageusement enfin, ce dispositif de ce type utilise un nouvel ensemble de calibration séquentielle de la chaîne de réception par mesure du produit "Puissance Emise x Gain de Réception", cet ensemble comportant une boucle d'asservissement qui reçoit, par un coupleur directif placé en sortie de l'amplificateur de puissance d'émission, une faible portion du signal émis, et met cette dernière en mémoire, puis qui mémorise de même ensuite, après réception de l'echo et avant la présence d'un autre signal d'émission, une impulsion de calibration, identique au signal d'émission et de même fréquence, qui est injectée directement dans cette boucle, cette impulsion étant toutefois préférentiellement de plus faible puissance et étant injectée à travers un atténuateur réglable, commandé par cette dernière boucle, qui règle en conséquence, par étapes successives pouvant s'étendre sur plusieurs impulsions d'émission successives, le coefficient d'atténuation de cet atténuateur pour que ces deux valeurs mémorisées soient égales en énergie, de sorte qu'alors le produit recherché "Puissance Emise x Gain de Réception" est donné par le produit de la valeur, mesurée en fin de chaîne de réception, de la puissance due à cette impulsion de calibration et alors injectée directement dans la chaîne de réception via ce coupleur directif, par le double de la valeur, en décibels, du coefficient de couplage de ce coupleur directif.

De toute façon, l'invention sera bien comprise, et ses avantages et autres caractéristiques ressortiront, lors de la description suivante d'un ensemble non limitatif de réalisation de ce diffusiomètre à vent embarqué sur satellite, en référence au dessin schématique annexé dans lequel :

. Figure 1 est une vue perspective montrant le principe de fonctionnement de cet ensemble;

. Figure 2 est une vue agrandie d'un des rectangles d'observation en mer par une antenne médiane, qui sont dessinés sur cette figure 1; et

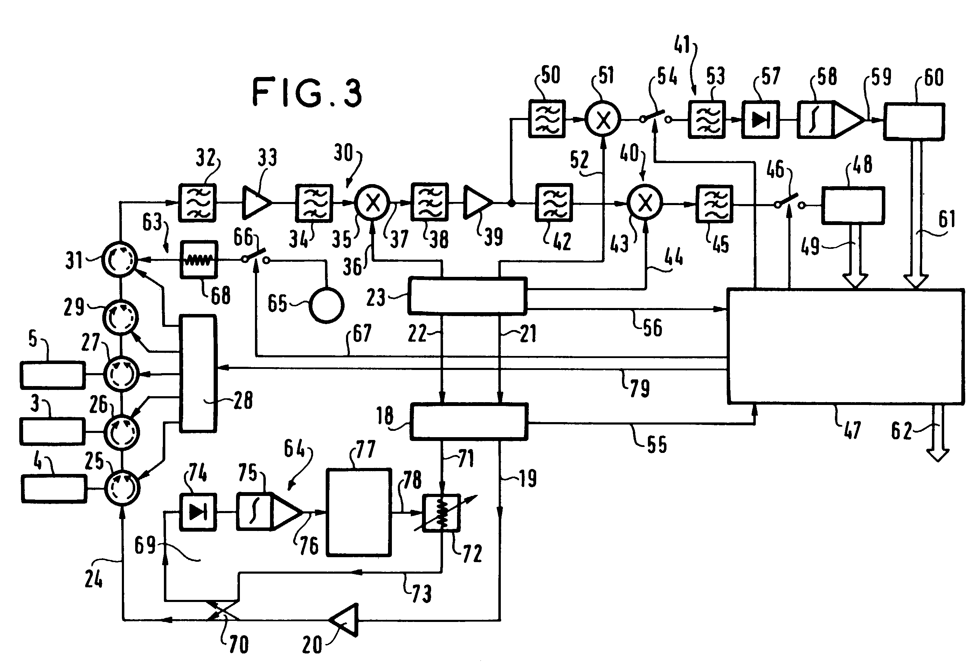

. Figure 3 est un schéma synoptique simplifié de l'électronique de bord de ce satellite, en ce qui concerne sa partie diffusiométrie.

En se reportant tout d'abord à la figure 1, le satellite 1 tourne autour de la terre, à une altitude d'environ 800 kilomètres pour fixer les idées, et selon une trace au sol 2, dessinée rectiligne en première approximation.

Il contient un émetteur/récepteur d'une onde radar, émise par exemple et préférentiellement en bande C, et est muni de trois antennes 3,4,5, à commutation électronique de faisceau dans cet exemple d'exécution, qui émettent vers la terre (c'est à dire, en ce qui nous intéresse ici, vers la mer) six faisceaux qui définissent deux fauchées 6,7 parallèles à la trace au sol 2 et situées de part et d'autre de celle-ci. Par exemple, chaque fauchée 6,7 à une largeur de l'ordre de 550 kilomètres.

Conformément à l'invention, ces trois antennes réalisent, pour la fauchée droite 7 comme pour la fauchée gauche 6, trois visées par fauchée :

. une visée médiane 8, qui en soi n'est pas nouvelle, définissant une trace au sol médiane 11 qui est perpendiculaire à la trace au sol 2 du satellite et qui est comprise dans le plan vertical 14 passant par ce satellite 1;

. une visée avant 9 qui définit une trace au sol avant 12 comprise dans un plan oblique passant par le satellite 1 et situé en avant du plan 14, cette trace au sol avant 12 étant parallèle à la trace au sol médiane 11; et

. une visée arrière 10 symétrique de la visée avant 9 par rapport au plan vertical précité 14, et définissant de ce fait une trace au sol arrière 13 qui est située en arrière de la trace médiane 11 et qui est parallèle à cette dernière et à égale distance de celle-ci que la trace avant 12 : par exemple, les distances entre les traces 11 et 12 d'une part et entre les traces 11 et 13 d'autre part sont toutes deux égales à 880 kilomètres environ.

Le satellite émet, dans chaque faisceau d'antenne 8,9,10, des ondes radar en direction de points successifs de chaque trace au sol, respectivement 11,12,13, et il mesure l'intensité de l'onde réfléchie et reçue en écho. Cette mesure est renvoyée au sol pour traitement apte à en déduire le coefficient de rétrodiffusion corrigé de la mer en chacun de ces points d'analyse successifs. Une moyenne est alors calculée au sol dans des carrés ou rectangles 15 de dimensions prédéfinies (par exemple 25 kilomètres par 25 kilomètres) et découpés en damier dans chaque fauchée 7 et 6.

Un de ces carrés ou rectangles d'analyse 15 est représenté en vue agrandie en Figure 2, où il est supposé balayé de l'avant vers l'arrière par la trace d'antenne 11 par exemple, le point momentanément analysé (ou mesuré) étant désigné par la référence 16.

Selon une caractéristique avantageuse de l'invention, on utilise une technique radar à compression d'impulsion, qui est calquée sur celle couramment employée dans les filtres acoustiques. Le signal qui est émis du satellite vers la terre n'est en conséquence pas une impulsion fine, mais un signal "chirp" constitué par une onde d'amplitude constante, modulée linéairement en fréquence, et de durée déterminée. Cette onde représente une bande passante de largeur B et à bords pratiquement droits. On montre mathématiquement qu'en effectuant, sur l'onde d'écho renvoyée et reçue par le satellite, une corrélation de formule bien connue entre cette onde reçue et l'onde émise, correctement retardée en temps et éventuellement décalée en fréquence (ceci en raison de l'effet Doppler), on obtient une impulsion fine dont la largeur est égale à 1/B et dont l'amplitude est proportionnelle au coefficient de rétrodiffusion cherché. On montre également aisément que la résolution spatiale de ce dispositif correspond sur la trace d'antenne au sol 11, à un petit rectangle 17, contenant le point momentanément visé 16 et de largeur

$$1 = \frac{c}{2 \, B. \, sini}$$

où c est la vitesse de propagation de cette onde radioélectrique, et i est l'angle d'incidence du faisceau, indiqué en Figure 1.

La figure 3 donne le schéma synoptique du dispositif électronique, embarqué sur le satellite 1, qui réalise l'émission des ondes radar vers la terre, ainsi que leur réception après réflexion, avec mesure de l'amplitude du pic obtenu après corrélation. Ce dispositif réalise aussi, comme on le verra ci-dessous, une calibration quasi-permanente de la chaîne de mesure de bruit ainsi que de la chaîne de réception.

En se reportant donc à cette figure 3, un générateur 18, préférentiellement de type numérique, est apte à générer sur une de ses sorties 19, un signal chirp d'émission vers un amplificateur de puissance 20 qui, ne nécessitant que quelques dizaines de watts en sortie, est avantageusement un amplificateur entièrement transistorisé. Ce générateur 18 reçoit, sur des entrées 21 et 22 respectivement et en provenance d'un générateur de fréquences locales 23, un signal d'horloge d'une part et un signal à radiofréquence fixe d'autre part.

Ce signal chirp amplifié est appliqué, par la liaison 24 et à travers des circulateurs 25,26,27 commandés par un circuit 28, à l'une ou l'autre des antennes d'émission 4,3,5, commutées alternativement sur la fauchée 6 et sur la fauchée 7 par un circuit de commutation électronique non représenté. Pour la clarté de la description, seule une fauchée, par exemple 7, est supposée éclairée conformément à ce qui est représenté sur ce schéma.

Afin d'éviter les fuites d'émission vers la partie réception, deux autres circulateurs 29,31 sont prévus pour fonctionner en interrupteur ouvert pendant l'émission et fermé pendant la réception.

Le signal d'écho (qui est toujours un signal chirp, mais retardé en temps et éventuellement décalé en fréquence) est reçu par le système d'antennes et est appliqué à la voie de réception 30 à travers l'interrupteur 29,31 alors fermé.

Le signal utile reçu est de faible amplitude et est totalement noyé dans le bruit : la chaîne doit donc en extraire ce signal utile.

La chaîne 30 comporte un premier filtre passebande 32 apte à éliminer les parasites proches de la bande utile du signal. Le signal est ensuite amplifié par un amplificateur à faible bruit 33, puis il passe dans un deuxième filtre passe-bande 34, destiné, en éliminant classiquement la fréquence image, à l'obtention d'un changement de fréquence à bande latérale unique.

Un premier changement de fréquence est alors effectué grâce à un mélangeur 35 recevant ce signal utile et, sur son autre entrée 36, une fréquence locale en provenance du générateur 23. Le signal obtenu en sortie 37 du mélangeur 35 est un signal en Fréquence Intermédiaire à par exemple 200 Mégahertz.

Après passage dans un filtre passe-bas 38, classiquement destiné à l'élimination des autres produits de mélange et à la réduction de la bande de bruit, ce signal est amplifié jusqu'au niveau souhaité au moyen de l'amplificateur en Fréquence Intermédiaire 39, puis est appliqué simultanément à deux chaînes de mesure fonctionnant en parallèle :

. une première chaîne 40 de mesure de l'ensemble "signal plus bruit" correspondant à l'echo reçu; et
. une deuxième chaîne 41 de mesure du bruit seul.

La chaîne 40 comporte tout d'abord un filtre de bande 42 destiné, à l'instar du filtre 34 précité, à éliminer la fréquence image pour un second changement de fréquence destiné à descendre en bande de base. Ce second changement de fréquence s'effectue par un mélangeur 43 qui reçoit sur son autre entrée 44 sa fréquence locale en provenance du générateur 23, et un nouveau filtre passebas 45 vient limiter, avant l'échantillonnage du signal effectué par un échantillonneur 46 commandé par un microprocesseur 47, la bande du signal pour éviter les problèmes de repliement de spectre. Ce signal échantillonné est alors numérisé par un convertisseur Analogique/Numérique 48 et est transmis au microprocesseur 47 par une liaison numérique 49.

La chaîne de mesure de bruit 41 qui, selon un aspect original de l'invention, fonctionne en même temps que la chaîne 40, comporte elle-aussi un abaissement de fréquence, avec comme précédemment un filtre passe-bande 50, suivi d'un mélangeur 51 recevant sa fréquence locale sur sa deuxième entrée 52.

Un interrupteur 54 est commandé par le microprocesseur 47 pour être ouvert à l'émission et fermé à la réception. A noter que le générateur de signal d'émission 18 comporte une liaison d'information 55 vers le microprocesseur 47, ce dernier recevant, par une liaison 56 son signal d'horloge du générateur 23.

Un filtre passe-bande 53 sert à sélectionner la bande de bruit que l'on veut mesurer et le signal en sortie de ce filtre est appliqué à un détecteur 57 qui mesure l'amplitude du niveau de bruit, puis à un intégrateur-amplificateur 58. Le niveau de bruit alors intégré en sortie 59 de cet intégrateur est lui-aussi numérisé dans un convertisseur Analogique/Numérique 60 et transmis au microprocesseur 47 par une liaison numérique 61.

Le microprocesseur 47 effectue la corrélation mathématique "de compression d'impulsion" entre ce signal d'écho reçu et le signal précédemment émis (qui lui avait été transmis par la liaison 55) après l'avoir retardé en conséquence en temps et en fréquence. Cette opération de corrélation fournit le signal qui correspond à l'impulsion fine de largeur 1/B, et l'amplitude de ce signal, qui comme on le sait est proportionnelle au coefficient de rétrodiffusion de la mer, est transmise, par l'intermédiaire de la voie de sortie 62, au sol pour y être traitée afin d'obtenir, compte-tenu des trois informations successives relatives à un même point et dues aux trois traces 12,11,puis 13, l'amplitude et la direction du vent à court terme en ce point.

Cette installation embarquée comporte en outre deux chaînes de calibration particulièrement intéressantes : une chaîne 63 de calibration du bruit, et une chaîne 64 de calibration de la mesure d'écho elle-même, c'est à dire en fait de détermination du produit variable "Puissance d'émission x Gain de réception", les autres facteurs intervenant dans la mesure du coefficient de rétrodiffusion ayant des valeurs fixes. Ces deux chaînes de calibration peuvent soit fonctionner en permanence, fournissant une recalibration quasi-omniprésente, soit de manière séquentielle, c'est à dire de temps en temps.

La chaîne de calibration du bruit 63 comporte un générateur de bruit 65 apte à émettre successivement deux niveaux de bruit d'amplitude déterminée (nécessaires à l'opération de calibration), ce générateur étant suivi d'un interrupteur statique 66 commandé par une sortie 67 du microprocesseur 47, et d'un atténuateur 68 de valeur fixe, les deux niveaux de bruit précités étant fournis, au moyen du circulateur-commutateur 31 commandé en conséquence par le microprocesseur 47 via une liaison de commande 79 et le circuit précité 28, directement et uniquement à la chaîne de réception 30, qui fournit en conséquence, via la chaîne 41 et liaison 61, au microprocesseur 47 les deux valeurs d'amplitude de bruit nécessaires à la calibration de bruit, l'opération de calibration étant bien entendu faite au sol (données transmises via la liaison 62).

La chaîne de calibration 64 de la chaîne de réception 30 effectue, d'une manière originale, la mesure du produit "Puissance d'émission Pe x Gain de réception Gr", les grandeurs Pe et Gr étant les seules grandeurs pratiquement susceptibles de varier.

Cette chaîne 64 comporte une boucle d'asservissement échantillonné 69 qui est couplée à la ligne de sortie 24 de l'amplificateur d'émission 20 par un coupleur directif en guide d'onde 70 de coefficient de couplage C défini et particulièrement stable. Cette boucle est en outre alimentée séquentiellement, via une sortie 71 du générateur 18 et un atténuateur règlable 72, par un signal chirp identique à celui émis sur la ligne 19, mais toutefois préférentiellement de bien plus faible niveau. La sortie 73 de cet atténuateur 72 passe comme représenté par la seconde branche du coupleur 70 (à l'instar de la ligne 24 qui passe par la première branche de celui-ci), et alimente un détecteur 74, lui-même suivi d'un intégrateur-amplificateur 75 dont le signal en sortie 76 est appliqué à un circuit simple 77 de mémorisation et de commande automatique de gain qui possède une sortie 78 agissant sur l'atténuateur variable 72.

Le fonctionnement de cette chaîne de calibration 64 est le suivant :

A l'émission d'un signal chirp en direction de la terre, une faible portion de ce signal, égale à la puissance Pe atténuée de C décibels, est prélevée de la sortie 24 de l'amplificateur 20 par le coupleur 70, est détectée et intégrée par les circuits 74 et 75 de la boucle 69, et est mise en mémoire dans l'organe 77.

Après réception de l'écho, et avant l'émission d'un nouveau signal chirp sur la liaison 19, un signal chirp est réémis directement dans la boucle 69 par la sortie précitée 71 du générateur 18. Ce signal, qui est de mêmes fréquence et forme que le signal d'émission, est lui-aussi, après détection en 74 et intégration en 75, mémorisé dans l'organe 77, qui réagit en conséquence, via la commande 78, sur l'atténuateur 72 pour obtenir la fois suivante deux signaux mémorisés (émis en sortie 19 et collecté par l'organe 77 d'une part, puis réémis en sortie 71 et collecté de même façon) qui soient d'égales amplitudes. Eventuellement, cette égalisation des signaux ainsi mémorisés en 77 n'est obtenue qu'après plusieurs de ces opérations successives de commande automatique de gain via la commande 78.

Lorsque ces deux signaux mémorisés dans l'organe 77 (fraction du signal d'émission prélevée par le coupleur 70 d'une part, et signal réémis en sortie 71 convenablement atténué par l'atténuateur réglable 72 commandé par la boucle d'asservissement 69) sont rigoureusement égaux, le signal réémis et présent sur la liaison 73 est parallèlement injecté sur la liaison 24 via le coupleur 70 (qui l'atténue donc en conséquence de C décibels) et est appliqué directement et uniquement à la chaîne de réception 30, les circulateurs 25,26,27,29,31 étant commandés en conséquence par le circuit 28 pour tous jouer le rôle d'interrupteurs fermés. L'amplitude de ce dernier signal est alors mesurée au niveau du microprocesseur 47 et transmise au sol via la sortie 62 pour calibration des instruments au sol. Ce signal mesuré est bien un signal apte à permettre la calibration de la chaîne de réception 30, puisqu'il est égal au signal alors d'abord réémis sur la liaison 73, qui comme on l'a vu est égal à celui correspondant à la puissance d'émission Pe atténué une première fois de C décibels, puis transmis sur 24 via le coupleur 70, donc atténué une deuxième fois de C décibels, puis amplifié par la chaîne de réception 30 de gain Gr. Comme le coefficient d'atténuation C est connu et stable, le produit Pe.Gr recherché, et nécessaire à la calibration, est donc égal à ce signal mesuré, atténué deux fois de la valeur (en décibels) de ce coefficient de couplage C.

Une particularité supplémentaire du dispositif de calibration est de pouvoir tester le signal émis et réfléchi par la désadaptation des antennes vers le récepteur. Il suffit pour cela de choisir, par l'intermédiaire du circuit de commande 28, l'antenne sélectionnée pour émettre le signal de calibration à travers elle. On teste ainsi les pertes de la matrice de commutation des circulateurs 25, 26, 27, 29 et 31 ainsi que les pertes par désadaptation.

Comme il va de soi, l'invention n'est pas limitée à l'exemple de réalisation qui vient d'être décrit, et de nombreuses autres formes de réalisation de ce diffusiomètre à vent par satellite sont envisageables.

C'est ainsi que le satellite 1 pourrait n'éclairer qu'une seule fauchée. C'est ainsi également que, dans le cas le plus rentable de deux fauchées 6 et 7, ce satellite pourrait comporter soit trois antennes par fauchée, et ne pas utiliser alors, avec en tout six antennes, de commutation électronique de faisceau, soit par exemple en tout cinq antennes : deux antennes distinctes pour les visées arrière 13 de chacune des deux fauchées, deux antennes distinctes pour les deux visées avant 12, et une seule antenne médiane 3 pour les deux visées médianes 11, cette dernière antenne 3 étant alors une antenne à commutation électronique de faisceau. La fréquence centrale d'émission peut-être choisie ailleurs qu'en bande C. Les caractéristiques de position et de dimensions de la fauchée peuvent être modifiées pour obtenir la meilleure couverture en fonction de l'orbite du satellite, etc...

## Revendications

1. Dispositif radar, embarqué sur satellite (1), de mesure du coefficient de rétrodiffusion de la mer pour la détermination de la vitesse et de la direction des vents en mer, ce dispositif utilisant trois visées radar (8,9,10) par fauchée (6,7), ces trois visées définissant respectivement :

- une trace au sol médiane (11) qui est classiquement orthogonale à celle (2) du satellite et qui est située dans un plan vertical (14) passant par celui-ci ;
- une trace au sol avant (12) ;
- une trace au sol arrière (13) ;

**caractérisé en ce que**

ladite trace au sol avant (12) est comprise dans un plan oblique (9), passant par le satellite et située en avant de celui (14) contenant ladite trace au sol médiane (11), et est parallèle à cette dernière (11), et en ce que
ladite trace au sol arrière (13) est comprise dans un autre plan oblique (10), passant par le satellite et situé en arrière de celui contenant ladite trace au sol médiane (11), et est parallèle à cette dernière (11).

2. Dispositif selon la revendication 1, caractérisé en ce qu'il comporte une chaîne (63) de réception du signal d'écho qui comprend une voie (41) de mesure de bruit reçu qui est distincte de la voie (40) de mesure du "signal et bruit" reçu, et qui fonctionne en parallèle avec cette dernière, c'est à dire en même temps.

3. Dispositif selon la revendication 1 ou la revendication 2, caractérisé en ce qu'il comporte des moyens de compression d'impulsion, et des moyens pour effectuer à la réception du signal d'écho un traitement de bord de type "filtre adapté" éventuellement décalé en fréquence pour tenir compte de l'effet DOPPLER.

4. Dispositif selon la revendication 2, caractérisé en ce qu'il comporte une chaîne (63) de calibration de la mesure de bruit qui comporte des moyens (65,66,68,31) pour générer deux signaux de bruit de niveaux déterminés et pour injecter ces deux signaux vers ladite voie (41) de mesure de bruit.

5. Dispositif selon l'une quelconque des revendications 1 à 4, caractérisé en ce qu'il comporte un ensemble (64) de calibration séquentielle de la chaîne de réception (30) par mesure du produit "puissance émise (Pe) x gain de réception (Gr)" , cet ensemble comportant une boucle d'asservissement (69),

ladite boucle d'asservissement comprenant, connectés en série : un coupleur directif (70), un détecteur (74), un intégrateur amplificateur (75), et un circuit (77) de mémorisation et de commande automatique de gain, dont la sortie est connectée à l'entrée de commande d'un atténuateur variable (72) ;

ladite boucle étant alimentée séquentiellement via ledit coupleur directif (70) ;

ladite boucle étant en outre alimentée séquentiellement via ledit atténuateur variable (72), par un signal chirp de calibration consistant en une réplique atténuée du signal d'émission, mémorisée par ledit circuit de mémorisation après avoir fait le tour de la boucle ;

ledit coupleur directif (70) étant connecté à la sortie de l'amplificateur de puissance (20) destiné à l'émission, afin de prélever une petite portion du signal émis, et d'injecter ce signal prélevé dans ladite boucle d'asservissement où il alimente ledit détecteur (74), suivi de l'intégrateur-amplificateur (75) d'où il est ensuite mémorisé par ledit circuit de mémorisation ;

ledit circuit de mémorisation et de commande automatique de gain faisant la comparaison entre les deux signaux mémorisés séquentiellement, et réglant ledit atténuateur variable pour obtenir que ces deux signaux soient d'égale amplitudes à l'émission suivante.

6. Dispositif, radar selon la revendication 1, caractérisé en ce qu'il comporte des moyens de compression d'impulsion, c'est à dire des moyens pour émettre vers le sol un signal "chirp", et des moyens pour effectuer à la réception du signal d'écho un traitement de bord de type "filtre adapté" réalisant , une corrélation mathématique, entre ce signal d'écho et le signal émis, lui-même retardé en conséquence en temps et en fréquence, et en ce qu'il comporte en outre une chaîne (63) de calibration de la mesure de bruit comprenant des moyens (65, 66, 68, 31) pour générer deux signaux de bruit déterminés et pour injecter ces deux signaux vers une voie (41) de mesure de bruit.

7. Dispositif radar selon la revendication 1, caractérisé en ce qu'il comporte un ensemble (64) de calibration séquentielle de la chaîne de réception (30) et un coupleur directif (70) prévu en sortie d'un amplificateur de puissance destiné à l'émission, cet ensemble (64) effectuant une calibration par mesure du produit "puissance émise (Pe) x Gain de réception (Gr)" et comportant une boucle d'asservissement (69) qui reçoit, par un coupleur directif (70), une petite portion du signal émis et qui mémorise tout d'abord cette dernière, puis qui mémorise de même ensuite, après réception de l'écho et avant le prochain signal d'émission, un signal de calibration identique audit signal d'émission mais préférentiellement plus faible, qui est injecté directement dans cette boucle (69) à travers un atténuateur variable (72) commandé (78) par cette dernière, réglant en conséquence cet atténuateur (72) pour que ces deux signaux memorisés soient de même amplitude, l'atténuation de ce dernier (72) étant alors égal au coefficient de couplage (C) dudit coupleur directif, de sorte qu'alors le produit recherché (Pe x Gr) est donné par la valeur, mesurée en fin de chaîne de réception (30), de la puissance due au signal de calibration injecté directement dans la chaîne de réception (30) via le coupleur directif (70) atténués par le double (2C) de la valeur, en décibels, dudit coefficient de couplage du coupleur directif (70).

**Patentansprüche**

1. Radarvorrichtung auf einem Satelliten (1) zur Messung des Retrodiffusionskoeffizienten des Meeres und damit zur Bestimmung der Geschwindigkeit und der Richtung des Winds auf dem Meer, wobei diese Vorrichtung drei Radarstrahlen (8, 9, 10) je seitliches Beobachtungsband (6, 7) verwendet und wobei diese drei Strahlen auf dem Boden eine mittlere Auftreffzone (11), die üblicherweise senkrecht zur Projektion der Satellitenbahn und in einer durch den Satelliten verlaufenden senkrechten Ebene (14) liegt, eine vordere Auftreffzone (12) und eine hintere Auftreffzone (13), dadurch gekennzeichnet, daß die vordere Auftreffzone (12) in einer schrägen Ebene (9) liegt, die durch den Satelliten verläuft und vor der senkrechten Ebene (14) mit der mittleren Auftreffzone (11) liegt, wobei diese vordere Auftreffzone parallel zur mittleren Zone (11) verläuft, und daß die hintere Auftreffzone (13) in einer weiteren schrägen Ebene (10) liegt, die durch den Satelliten verläuft und hinter der die mittlere Auftreffzone (11) enthaltenden Ebene liegt, wobei auch diese hintere Zone (13) parallel zur mittleren Zone (11) verläuft.

2. Vorrichtung nach Anspruch 1, dadurch gekennzeichnet, daß sie eine Kette (63) zum Empfang des Echosignals enthält, die einen Kanal (41) zur Messung des empfangenen Rauschens zusätzlich zum Kanal (40) zur Messung von Empfangssignal plus Rauschen enthält, die parallel betrieben werden, d.h. zur selben Zeit.

3. Vorrichtung nach Anspruch 1 oder 2, dadurch gekennzeichnet, daß sie Impulskompressionsmittel und Mittel aufweist, um beim Empfang des Echosignals eine Verarbeitung vom angepaßten Filtertyp ggf. mit Frequenzverschiebung durchzuführen, um den Doppler-Effekt zu berücksichtigen.

4. Vorrichtung nach Anspruch 2, dadurch gekennzeichnet, daß sie eine Eichkette (63) zur Rauschmessung enthält, zu der Mittel (65, 66, 68, 31) zur Erzeugung zweier Rauschsignale bestimmter Pegel und zur Einspeisung dieser beiden Signale in den Rauschmeßkanal (41) gehören.

**5.** Vorrichtung nach einem beliebigen der Ansprüche 1 bis 4, dadurch gekennzeichnet, daß sie eine sequentielle Eicheinheit (64) für die Empfangskette (30) durch Messung des Produkts aus Sendeleistung (Pe) und Empfangsverstärkung (Gr) aufweist, die eine Regelschleife (69) enthält, daß die Regelschleife hintereinander einen Richtkoppler (70), einen Detektor (74), einen Integrierverstärker (75) und eine Speicher-und Steuerschaltung (77) zur automatischen Verstärkungssteuerung enthält, wobei der Ausgang dieser Schaltung an den Steuereingang eines veränderbaren Dämpfungsglieds (72) angeschlossen ist, daß die Schleife sequentiell über den Richtkoppler (70) gespeist wird und außerdem sequentiell über das veränderbare Dämpfungsglied (72) ein Chirp-Eichsignal empfängt, das ein gedämpftes Bild des Sendesignals ist und in der Speicherschaltung nach Durchlaufen der Schleife gespeichert wurde, daß der Richtkoppler (70) an den Ausgang des Sende-Leistungsverstärkers (20) angeschlossen ist, um einen kleinen Teil des Sendesignals zu entnehmen und in die Regelschleife einzuspeisen, wo er den Detektor (74) speist, auf den der Integrierverstärker (75) und schließlich die Speicherschaltung folgt, daß die Schaltung zur Speicherung und zur automatischen Verstärkungssteuerung einen Vergleich zwischen den beiden sequentiell gespeicherten Signalen durchführt und das variable Dämpfungsglied so einstellt, daß die beiden Signale gleiche Amplitude bei der nächsten Aussendung annehmen.

**6.** Radarvorrichtung nach Anspruch 1, dadurch gekennzeichnet, daß sie Mittel zur Impulskompression aufweist, d.h. Mittel, um ein Chirp-Signal in Richtung auf den Boden auszusenden, und Mittel, um beim Empfang des Echosignals im Satelliten eine Verarbeitung vom Typ angepaßtes Filter durchzuführen, mit der eine mathematische Korrelation zwischen diesem Echosignal und dem ausgesendeten Signal, das zeitlich und frequenzmäßig verzögert ist, durchgeführt wird, und daß die Vorrichtung weiter eine Eichkette (63) für die Rauschmessung aufweist, die Mittel (65, 66, 68, 31) zur Erzeugung von zwei bestimmten Rauschsignalen und zur Einspeisung dieser beiden Signale in einen Rauschmeßkanal (41) enthält.

**7.** Radarvorrichtung nach Anspruch 1, dadurch gekennzeichnet, daß sie eine sequentielle Eicheinheit für die Empfangskette (30) und einen Richtkoppler (70) am Ausgang eines Sende-Leistungsverstärkers aufweist, wobei diese Einheit (64) eine Eichung durch Messung des Produkts aus Sendeleistung (Pe) und Empfangsverstärkung (Gr) durchführt und eine Regelschleife (69) enthält, die über einen Richtkoppler (70) einen kleinen Teil des Sendesignals empfängt und zuerst diesen Teil speichert und dann ebenso nach Empfang des Echos und vor der nächsten Signalaussendung ein Eichsignal speichert, das dem Sendesignal gleicht, aber vorzugsweise schwächer ist und unmittelbar in die Schleife (69) über ein durch diese Schleife gesteuertes (78) variables Dämpfungsglied (72) eingespeist wird, wodurch das Dämpfungsglied (72) entsprechend so eingestellt wird, daß die beiden gespeicherten Signale die gleiche Amplitude annehmen, wobei dann die Dämpfung dieses Dämpfungsglieds (72) dem Kopplungskoeffizienten (C) des Richtkopplers gleicht, so daß das gewünschte Produkt (Pe·Gr) durch den am Ende der Empfangskette (30) gemessenen Wert der Leistung aufgrund des Eichsignals gegeben ist, das unmittelbar in die Empfangskette (30) über den Richtkoppler (70) eingespeist wird, aber um den doppelten Wert (2C) des Kopplungskoeffizienten des Richtkopplers (70) in Dezibel gedämpft ist.

**Claims**

**1.** Radar device on a satellite (1) for measuring the backscattering coefficient of the sea for determining the speed and the direction of the wind at sea, the device using three radar sightings (8, 9, 10) per swath (6, 7), the three sightings respectively defining:

. a median ground track (11) which is conventionally orthogonal to that (2) of the satellite and which is situated in the vertical plane (14) passing through the latter;

. a front ground track (12);

. a rear ground track (13);

characterised in that

said front ground track (12) is in an oblique plane (9) passing through the satellite, in front of that (14) containing said median ground track (11) and parallel to the latter (11), and in that said rear ground track (13) is in another oblique plane (10) passing through the satellite, to the rear of that containing said median ground track (11) and parallel to the latter (11).

**2.** Device according to claim 1 characterised in that it includes an echo signal receiver subsystem (63) which includes a received noise measurement channel (41) separate from the received "signal and noise" measurement channel (40) and which operates in parallel with the latter, i.e. at the same time.

**3.** Device according to claim 1 or claim 2 characterised in that it includes pulse compression means and means for effecting on board "matched filter" type processing of the received echo signal possibly offset in frequency to allow for the Doppler effect.

4. Device according to claim 2 characterised in that it includes a noise measurement calibration subsystem (63) which includes means (65, 66, 68, 31) for generating two noise signals of particular level and for injecting these two signals into said noise measurement channel (41).

5. Device according to any one of claims 1 to 4 characterised in that it includes a system (64) for sequential calibration of the receive subsystem (30) by measuring the "transmit power (Pe) x receive gain (Gr)" product, this system including a servo loop (69),

said servo loop comprising, connected in series: a directional coupler (70), a detector (74), an integrator-amplifier (75) and a memory and automatic gain control circuit (77) the output of which is connected to the control input of a variable attenuator (72);
said loop being fed sequentially via said directional coupler (70);
said loop being further fed sequentially via said variable attenuator (72) with a calibration chirp signal comprising an attenuated replica of the transmit signal memorised by said memory circuit before entering the loop;
said directional coupler (70) being connected to the output of the transmit power amplifier (20), in order to sample a small portion of the transmit signal and to inject the sampled signal into said servo loop where it feeds said detector (74) followed by the integrator-amplifier (75) after which it is memorised by said memory circuit;
said memory and automatic gain control circuit comparing the two signals memorised sequentially and controlling said variable attenuator so that these two signals are of equal amplitude on the next transmission.

6. Radar device according to claim 1 characterised in that it includes pulse compression means, i.e. means for transmitting towards the Earth a "chirp" signal and means for effecting on board "matched filter" type processing of the received echo signal establishing a mathematical correlation between the echo signal and the transmitted signal, delayed in time and offset in frequency, characterised in that it further comprises a noise measurement calibration subsystem (63) comprising means (65, 66, 68, 31) for generating two particular noise signals and for injecting these two signals into a noise measurement channel (41).

7. Radar device according to claim 1 characterised in that it includes a sequential calibration system (64) for the receive subsystem (30) and a directional coupler (70) at the output of a transmit power amplifier, the system (64) effecting calibration by measuring the "transmit power (Pe) x receive gain (Gr)" product and including a servo loop (69) which receives via a directional coupler (70) and stores a small portion of the transmitted signal and then stores, after reception of the echo and before the next transmit signal, a calibration signal identical to said transmit signal but preferably at a lower level, which is fed directly into said loop (69) via a variable attenuator (72) controlled (78) by the latter so that the two stored signals have the same amplitude, the attenuation of the latter (72) then being equal to the coupling coefficient (C) of said directional coupler so that the required product (Pe x Gr) is given by the measured value at the end of the receive subsystem (30) of the power due to the calibration signal fed directly into the receive subsystem (30) via the directional coupler (70) attenuated by twice the value in decibels (2C) of said coupling coefficient of the directional coupler (70).

# FIG.1

# FIG.2

FIG. 3